# EUROPÄISCHE PATENTSCHRIFT

(11) **EP 3 282 150 B1**
(45) Veröffentlichungstag und Bekanntmachung des Hinweises auf die Patenterteilung: **04.11.2020**
(21) Anmeldenummer: 17185899.6
(22) Anmeldetag: 11.08.2017
(51) Int. Cl.: F16J 15/02

(54) **DICHTUNGSANORDNUNG**
SEALING ASSEMBLY
SYSTÈME D'ÉTANCHÉIFICATION

(30) Priorität: 12.08.2016 DE 202016104466 U
(43) Veröffentlichungstag der Anmeldung: 14.02.2018
(73) Patentinhaber: Samson AG, 60314 Frankfurt (DE)
(72) Erfinder: Sander, Andreas, 69514 Laudenbach (DE)
(74) Vertreter: Puschmann Borchert Kaiser Klettner Patentanwälte Partnerschaft mbB

(56) Entgegenhaltungen:
- EP-A1- 0 630 457
- US-A- 4 130 285
- US-A- 5 058 906
- US-A- 5 620 187

## Beschreibung

Die Erfindung betrifft eine Dichtungsanordnung einer fluidischen Systemkomponente zum Betrieb mit kryogenen Medien, wobei eine erste Systemkomponente mit einer zweiten Systemkomponente über einen Dichtring abgedichtet ist.

Die US 5, 620,187 beschreibt eine kryogene Dichtung. Durch den unterschiedlichen Wärmekoeffizienten werden durch den Kälteeinfluss die zu verbindenden Teile geschrumpft, wobei ein Dichtungselement stärker geschrumpft wird, so dass eine Anpressung in Radialrichtung erfolgt, worüber eine Abdichtung gewährleistet werden kann. Die zu verbindenden Teile weisen einen geringeren Wärmeausdehnungskoeffizienten auf, als das Dichtungselement.

Die US 5,058,906 beschreibt eine Dichtungsanordnung, die einen Dichtungsring aufweist, der zusammen mit Leitungsteilen so zusammenwirkt, dass der Dichtungsring unter Wärme bzw. Kälteeinfluss sich schneller in seinem Druchmesser verändert als die Leitungsteile. So kann bei Temperaturschwenkungen die Dichtigkeit von Leitungsanschlüssen gewährleistet werden.
Es ist Aufgabe der Erfindung, eine Dichtungsanordnung zum Betrieb mit kryogenen Medien bzw. Fluiden mit einer verbesserten Dichtung anzugeben.

Die Aufgabe wird durch die Merkmale des Anspruchs 1 gelöst.

Die Unteransprüche bilden vorteilhafte Weiterbildungen der Erfindung.

In bekannter Weise umfasst eine Dichtungsanordnung einen Dichtungsring, der eine erste und eine zweite Systemkomponente verbindet, wobei der Dichtungsring bei Kälteeinwirkung stärker als die erste Systemkomponente und die zweite Systemkomponente schrumpft. Die erste und die zweite Systemkomponente liegen im Bereich der Dichtfläche, also mit ihren Dichtbereichen, in einer Schnittebene parallel zur Kontraktionsrichtung radial innerhalb des Dichtungsrings.

Schrumpft nun der Dichtungsring stärker als die erste und zweite Systemkomponente, die er umgibt, wird eine verbesserte Dichteigenschaft erreicht, da aufgrund der stärkeren thermischen Kontraktion des Dichtungsrings bei Kälteeinwirkung der Anpressdruck auf die Dichtflächen erhöht wird. Die erste und die zweite Systemkomponente begrenzen dabei wenigstens teilweise einen Prozessraum, in welchem sich kryogenes Fluid befinden kann.

Der Querschnitt des Dichtungsrings ist insbesondere derart ausgebildet, dass die Dichtflächen schräg zur Kontraktionsrichtung des Dichtungsrings liegen. So können die Dichtflächen orthogonal zur Kontraktionsrichtung aber auch in anderen Winkeln gegenüber der Kontraktionsrichtung geneigt angeordnet sein, sofern sich eine radial nach innen gerichtete Vektorkomponente der Dichtfläche ergibt.

In seiner einfachsten Ausgestaltung kann der Dichtungsring hohlzylindrisch ausgebildet sein, wobei die innere Mantelfläche zwei axial nebeneinanderliegende Dichtflächen zur Abdichtung mit einer ersten und einer zweiten Systemkomponente bildet. Die Dichtflächen können dabei unmittelbar aneinandergrenzen oder beabstandet zueinander liegen.

Gemäß einer weiteren Ausführungsform kann der Dichtungsring eine keilartige Querschnittsform aufweisen, sodass die Dichtflächen gegenüber der radialen Kontraktionsrichtung des Dichtungsrings derart geneigt sind, dass der Dichtungsring im Querschnitt in seinem Verlauf entgegen der Kontraktionsrichtung des Dichtungsrings beidseitig zunimmt. Durch eine schräge, insbesondere keilartige, Anordnung kann bei einer geringeren axialen Bauhöhe eine größere Dichtfläche erreicht werden.

So kann auch der Neigungswinkel der ersten Dichtfläche unterschiedlich zum Neigungswinkel der zweiten Dichtfläche gegenüber der Kontraktionsrichtung sein.

Wie bereits ausgeführt, führt bei Kälteeinwirkung die Kontraktion des Dichtungsrings zu einer Verstärkung des Andrucks des Dichtungsrings auf die Dichtflächen, wobei die Dichtfläche nicht unbedingt orthogonal zur Kontraktionsrichtung stehen muss. Jedoch muss immer gewährleistet sein, dass bei Kälteeinwirkung eine Kontraktion in Richtung der Dichtfläche erfolgt und somit eine Erhöhung der Anpresskraft entsteht. Steht die Dichtfläche nicht orthogonal zur Kontraktionsrichtung, dann ist zwar die resultierbare Anpresskraft gegenüber einer orthogonal zur Kontraktionsrichtung stehenden Dichtfläche kleiner, jedoch kann sich die Dichtfläche erhöhen, da weniger Bauraum benötigt wird. Bei der Ausrichtung der Dichtflächen zueinander muss immer berücksichtigt werden, dass eine Vektorkomponente der Dichtflächen kollinear zur Kontraktionsrichtung steht.

Erfindungsgemäß ist der Querschnitt des Dichtungsrings in der Art eines offenen Hohlprofils ausgebildet, wobei eine radial innen liegende Wandung bereichsweise einer außen liegenden durchgehenden Wandung gegenüberliegt, so dass zwischen der innen und außen liegenden Wand ein Hohlraum gebildet wird, wobei eine mit dem Prozessraum kommunizierende Öffnung bereitgestellt wird. Bevorzugt ist dazu ein Spalt zwischen der ersten und zweiten Dichtfläche vorgesehen.

In diesen Hohlraum kann das kryogene Fluid eindringen und zusätzlich einen Druck auf die Dichtflächen ausüben.

Weiter erfindungsgemäß ist ein erster Hohlraum radial hinter der ersten Dichtfläche und ein zweiter Hohlraum radial hinter der zweiten Dichtfläche gebildet. Damit wird eine verbesserte Abdichtung sowohl gegenüber der ersten Systemkomponente als auch gegenüber der zweiten Systemkomponente erreicht.

Eine zusätzliche Erhöhung der Anpresskraft wird erfindungsgemäß erreicht, indem in den gebildeten Hohlraum je ein Federring eingesetzt ist.

Erfindungsgemäß ist die erste Systemkomponente als Ventilkomponente, insbesondere in Form eines Ventilkäfigs, ausgebildet. Die zweite Systemkomponente ist entsprechend ebenfalls als Ventilkomponente, insbesondere in Form eines Ventilgehäuses, ausgebildet.

Alternativ kann die erste Systemkomponente ein Ventildeckel sein und die zweite Systemkomponente ein Gehäuse, insbesondere ein Ventilgehäuse, sein.

Weiter erfindungsgemäß weist der Dichtungsring an seiner radial außen liegenden Wandung eine Ausnehmung, insbesondere eine umlaufende Nut, auf. Auf diese Weise kann ein korrespondierender Vorsprung im Gehäuse den Dichtungsring auch bei temperaturbedingten Durchmesseränderungen zuverlässig in Axialrichtung festlegen und dennoch die radiale Ausdehnungs- / Kontraktionsfreiheit garantieren.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Teilschnittansicht eines erfindungsgemäßen kryogenen Regelventils;
- Fig. 2: eine Detailansicht der Abdichtung;
- Fig. 3: ein weiteres Anwendungsbeispiel für eine erfindungsgemäße Dichtungsanordnung;
- Fig. 4a: einen Querschnitt durch einen Dichtungsring;
- Fig. 4b: ein weiteres Ausführungsbeispiel einer Dichtungsanordnung;
- Fig. 4c: ein weiteres Ausführungsbeispiel einer Dichtungsanordnung;
- Fig. 5: eine Anordnung, umfassend einen Dichtungsring mit einem keilartigen Querschnitt.

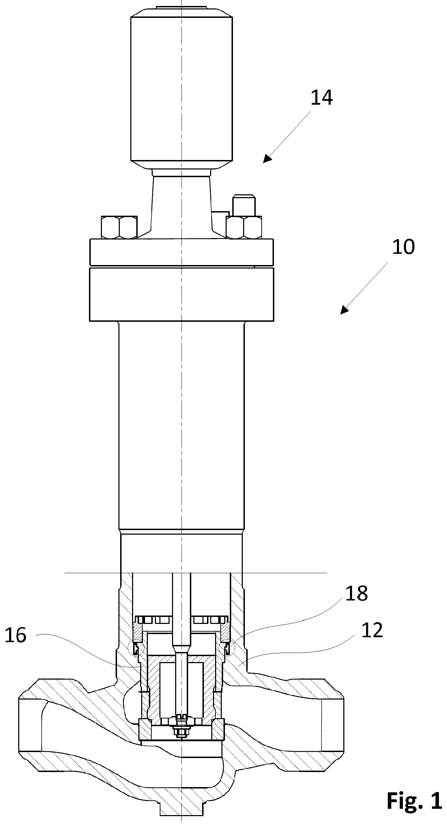

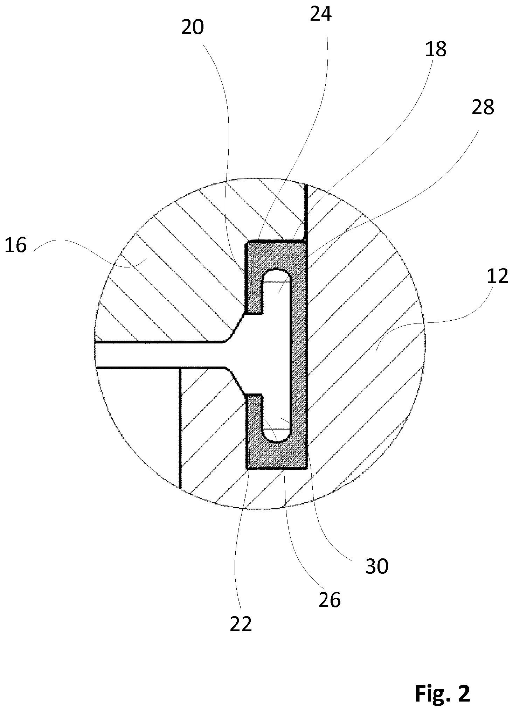

Fig. 1 zeigt eine schematische Teilschnittansicht eines Regelventils 10 für kryogene Medien, umfassend ein Ventilgehäuse 12 und einen Stellantrieb 14. In dem dargestellten Ausführungsbeispiel ist ein Käfigventil gezeigt, wobei der Ventilkäfig 16 gegenüber dem Ventilgehäuse 12 abgedichtet ist. Dies erfolgt über einen erfindungsgemäßen Dichtungsring 18. Dieser ist in der Detailansicht gemäß Fig. 2 näher erläutert.

Fig. 2 zeigt eine Schnittansicht des Dichtungsrings 18 in einer Detailansicht, der mit einer ersten Dichtfläche 20 mit dem Ventilkäfig 16 in Verbindung steht und mit einer zweiten Dichtfläche 22 mit dem Ventilgehäuse 12. Das Ventilgehäuse 12 weist dazu eine axial im Gehäuse liegende Ringnut auf, in welche der Dichtungsring 18 eingesetzt werden kann, so dass dieser den durch die Nut entstandenen Dichtbereich des Ventilgehäuses 12 umschließen kann. Auf diese Weise liegen sowohl der Ventilkäfig 16 als auch der Dichtbereich des Ventilgehäuses 12 innerhalb des Dichtungsrings 18, so dass bei einer stärkeren Kontraktion des Dichtungsrings 18 unter Kälteeinfluss die Anpresskraft an die entsprechenden Ventilkomponenten 12, 16 erhöht wird, wodurch die Dichtwirkung verbessert wird.

Wie in dieser Darstellung gut zu erkennen ist, ist der Dichtungsring 18 in der Art eines Hohlprofils ausgebildet, wobei in der radial innen liegenden Wandung ein Durchbruch in Form eines umlaufenden Spalts zu erkennen ist, so dass der Innenraum des Dichtungsring 18 mit dem Ventilinnenraum kommunizierend verbunden ist. Ferner ergeben sich durch diese Gestaltung Dichtlippen 24, 26 die radial innen die Dichtflächen 20, 22 mit dem Ventilgehäuse 12 und dem Ventilkäfig 16 bilden. Zwischen den Dichtlippen 24, 26 und der radial äußeren Wandung des Dichtungsrings 18 ergibt sich jeweils ein Hohlraum 28, 30, in welchen das kryogene Fluid eindringen kann und so zusätzlich eine radiale Anpresskraft auf die Dichtbereiche ausübt.

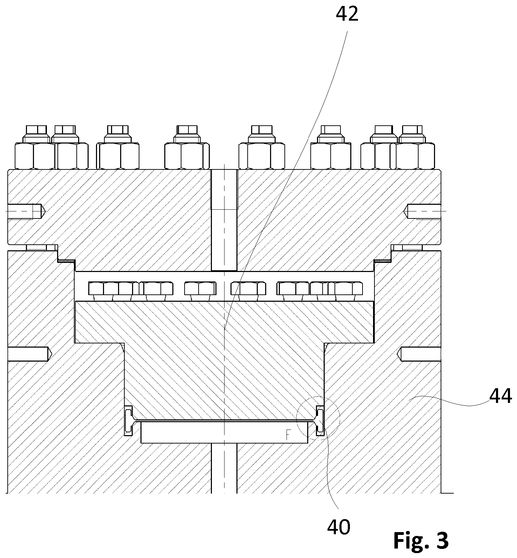

Fig. 3 zeigt eine Schnittansicht eines weiteren Anwendungsbeispiels für eine erfindungsgemäße Dichtungsanordnung. Der Dichtungsring 40 verbindet einen Deckel 42 mit einem Gehäuse 44 und dichtet so einen Gehäuseinnenraum gegenüber der Atmosphäre ab. Diese Anordnung kann Teil eines Regelventils oder auch eines Leitungsabschnitts sein. Der Dichtungsring 40 wirkt wie im Beispiel des Regelventils gemäß Fig. 2 beschrieben. Zu beachten ist, dass der Deckel 42 und der Dichtbereich des Gehäuses 44 koaxial zueinander liegen und in Axialrichtung festgelegt sind.

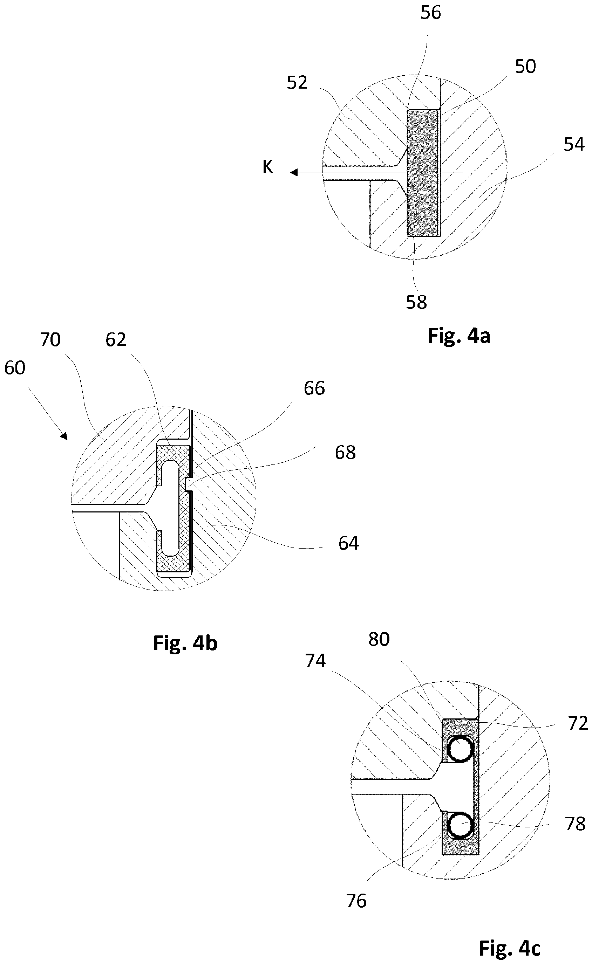

Fig. 4a zeigt einen teilweisen Querschnitt durch einen Dichtungsring 50 in einer einfachen Ausgestaltung. Der Querschnitt des Dichtungsrings 50 ist rechteckig, wodurch der Dichtungsring 50 demnach hohlzylindrisch ausgestaltet ist. Im Hohlzylinder ergeben sich zwei benachbarte und im vorliegenden Fall auch axial beabstandete Dichtflächen 56, 58, eine erste Dichtfläche 56 mit einer ersten Systemkomponente 52 und eine zweite Dichtfläche 58 mit einer zweiten Systemkomponente 54. Beide Systemkomponenten 52, 54 liegen mit ihrem Dichtbereich radial innerhalb des Dichtungsrings 50, wobei sich die Dichtflächen 56, 58 orthogonal zur Kontraktionsrichtung K des Dichtungsrings 50 erstrecken.

Fig. 4b zeigt einen teilweisen Querschnitt eines weiteren Ausführungsbeispiels einer Dichtungsanordnung 60 mit einem ein Hohlprofil aufweisenden Dichtungsring 62, wie er prinzipiell bereits in der Fig. 2 beschrieben wurde. Gemäß diesem Ausführungsbeispiel weist der Dichtungsring 62 in seiner äußeren Wandung zudem eine umlaufende Nut 68 auf, die mit einem an einer ersten Systemkomponente 64 angeformten Vorsprung 66 korrespondiert. Dadurch kann der Dichtungsring 62 unter Beibehaltung einer Ausdehnungsfreiheit in radialer Richtung in axialer Richtung festgelegt werden.

Fig. 4c zeigt einen teilweisen Querschnitt eines Dichtungsrings 72 ähnlich dem in Fig. 2 beschriebenen. In dieser Anordnung ist in jeden Hohlraum hinter den Dichtlippen 74, 76 je ein Federring 78, 80 eingebracht, der zusätzlich den durch das Fluid bereitgestellten Anpressdruck und den durch die durch Kälte verursachte thermische Kontraktion erhöhten Anpressdruck weiter unterstützt.

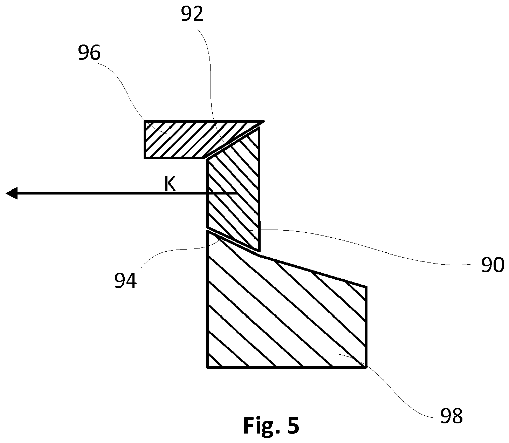

Fig. 5 zeigt einen schematischen teilweisen Querschnitt einer Anordnung, bei der der Dichtungsring 90 eine keilartige Querschnittsform aufweist, wobei die erste Dichtfläche 92 und die zweite Dichtfläche 94 gegenüber der Kontraktionsrichtung K des Dichtungsrings 90 geneigt sind. Dadurch kann eine Dichtwirkung über eine größere Fläche bei geringer axialer Bauhöhe des Dichtungsrings 90 erreicht werden. Der Dichtungsbereich der ersten Systemkomponente 96 und der Dichtungsbereich der zweiten Systemkomponente 98 liegen entsprechend in Radialrichtung innerhalb des Dichtungsrings 90. Schneidet man also die Anordnung parallel zur Kontraktionsrichtung im Bereich der Dichtfläche 92, 94 so liegt die Systemkomponente in Kontraktionsrichtung K immer innerhalb des Dichtungsrings 90. Dies bedeutet, dass in Kontraktionsrichtung der Dichtungsring 90 gegen den Dichtbereich einer Systemkomponente drückt. Dies ist, wie im vorliegenden Fall dargestellt, auch nicht nur erfüllt, wenn die Dichtfläche orthogonal zur Kontraktionsrichtung ausgerichtet ist sondern auch, wenn diese geneigt ist. Durch die geneigte Anordnung kann bei einer geringeren axialen Bauhöhe eine größere Dichtfläche erreicht werden.

### Bezugszeichenliste

- 10: Regelventil
- 12: Ventilgehäuse
- 14: Stellantrieb
- 16: Ventilkäfig
- 18: Dichtungsring
- 20: erste Dichtfläche
- 22: zweite Dichtfläche
- 24: Dichtlippe
- 26: Dichtlippe
- 28: erster Hohlraum
- 30: zweiter Hohlraum
- 40: Dichtungsring
- 42: Deckel
- 44: Gehäuse
- 50: Dichtungsring
- 52: erste Systemkomponente
- 54: zweite Systemkomponente
- 56: erste Dichtfläche
- 58: zweite Dichtfläche
- 60: Dichtungsanordnung
- 62: Dichtungsring
- 64: erste Systemkomponente
- 66: Vorsprung
- 68: Nut
- 70: zweite Systemkomponente
- 72: Dichtungsring
- 74: Dichtlippe
- 76: Dichtlippe
- 78: Federring
- 80: Federring
- 90: Dichtungsring
- 92: erste Dichtfläche
- 94: zweite Dichtfläche
- 96: erste Systemkomponente
- 98: zweite Systemkomponente
- K: Kontraktionsrichtung

## Patentansprüche

1. Dichtungsanordnung eines fluidischen Systems zum Betrieb mit kryogenen Medien, umfassend einen Dichtungsring (18, 40, 50, 62, 72, 90), wobei eine erste Systemkomponente (16, 42, 52, 64, 96) mit einer zweiten Systemkomponente (12, 44, 54, 70, 98) über den Dichtungsring (18, 40, 50, 62, 72, 90) verbunden ist, wobei der Dichtungsring (18, 40, 50, 62, 72, 90) ferner eine erste Dichtfläche (20, 56, 92) zur Abdichtung mit der ersten Systemkomponente (16, 42, 52, 64, 96) aufweist und der Dichtungsring (18, 40, 50, 62, 72, 90) eine zweite Dichtfläche (22, 58, 94) zur Abdichtung mit der zweiten Systemkomponente (12, 44, 54, 70, 98) aufweist, wobei die erste Dichtfläche (20, 56, 92) und die zweite Dichtfläche (22, 58, 94) des Dichtungsrings (18, 40, 50, 62, 72, 90) so gestaltet sind, dass die erste und zweite Systemkomponente (12, 44, 54, 70, 98) im Bereich der Dichtflächen (20, 22, 92, 94) in einer Schnittebene parallel zur Kontraktionsrichtung radial innerhalb des Dichtungsrings (18,40, 50, 62, 72, 90) liegen und der Dichtungsring (18, 40, 50, 62, 72, 90) bei Kälteeinwirkung stärker thermisch kontrahiert als die erste Systemkomponente (16, 42, 52, 64, 96) und die zweite Systemkomponente (12, 44, 54, 70, 98), dass der Querschnitt des Dichtungsrings (18, 62, 72) in der Art eines offenen Hohlprofils ausgebildet ist, wobei eine radial innen liegende Wandung bereichsweise einer außen liegenden durchgehenden Wandung gegenüberliegt, so dass zwischen der innen liegenden und außen liegenden Wandung ein Hohlraum (28, 30) gebildet ist, wobei ein erster Hohlraum (28) an einer eine erste Dichtfläche (20, 56) bildende Wandung und ein zweiter Hohlraum (30) an der eine zweite Dichtfläche (22, 58) bildende Wandung gebildet ist, **dadurch gekennzeichnet, dass** in den gebildeten Hohlraum je ein Federring (78, 80) eingesetzt ist, wobei die erste Systemkomponente eine erste Ventilkomponente (16) und die zweite Systemkomponente eine zweite Ventilkomponente (12) ist, wobei der Dichtungsring (62) an seiner radial außen liegenden Wandung eine Ausnehmung aufweist.

2. Dichtungsanordnung nach Anspruch 1, **dadurch gekennzeichnet, dass** der Dichtungsring (18, 40, 50, 62, 72, 90) eine Querschnittsform aufweist, bei welcher wenigstens eine Dichtfläche (20, 22, 92, 94) schräg in einem Winkel ungleich 90° zur Kontraktionsrichtung (K) des Dichtungsrings (18, 40, 50, 62, 72, 90) liegt.

3. Dichtungsanordnung nach Anspruch 2, **dadurch gekennzeichnet, dass** der Dichtungsring (90) eine keilartige Querschnittsform aufweist, sodass die Dichtflächen (92, 94) gegenüber der radialen Ausdehnungsrichtung des Dichtungsrings (90) derart geneigt sind, dass der Dichtungsring (90) in seinem Querschnitt in seinem Verlauf entgegen der Kontraktionsrichtung (K) beidseitig zunimmt.

4. Dichtungsanordnung nach Anspruch 2, **dadurch gekennzeichnet, dass** der Neigungswinkel der ersten Dichtfläche (92) unterschiedlich zum Neigungswinkel der zweiten Dichtfläche (94) ist.

5. Dichtungsanordnung nach Anspruch 1, **dadurch gekennzeichnet, dass** die erste Ventilkomponente ein Ventilkäfig (16) und die zweite Ventilkomponente (12, 16) ein Ventilgehäuse (12) ist.

6. Dichtungsanordnung nach einem der vorangehenden Ansprüche, **dadurch gekennzeichnet, dass** die erste Systemkomponente ein Deckel (42), insbesondere ein Ventildeckel, und die zweite Systemkomponente ein Gehäuse (44), insbesondere ein Ventilgehäuse, ist.

7. Dichtungsanordnung nach einem der vorangehenden Ansprüche, **dadurch gekennzeichnet, dass** die außen liegenden Wandung eine Ausnehmung in Form, einer umlaufende Nut (66), ausgebildet ist.

## Claims

1. Sealing arrangement of a fluidic system for operation with cryogenic media, which sealing arrangement comprises a sealing ring (18, 40, 50, 62, 72, 90), which sealing ring (18, 40, 50, 62, 72, 90) is used to connect a first system component (16, 42, 52, 64, 96) to a second system component (12, 44, 54, 70, 98), which sealing ring (18, 40, 50, 62, 72, 90) further has a first sealing surface (20, 56, 92) for sealing with said first system component (16, 42, 52, 64, 96) and said sealing ring (18, 40, 50, 62, 72, 90) has a second sealing surface (22, 58, 94) for sealing with said second system component (12, 44, 54, 70, 98), said first sealing surface (20, 56, 92) and said second sealing surface (22, 58, 94) of said sealing ring (18, 40, 50, 62, 72, 90) being designed such that in the region of the sealing surfaces (20, 22, 92, 94), said first and second system components (12, 44, 54, 70, 98) are arranged radially within said sealing ring (18, 40, 50, 62, 72, 90) in a sectional plane parallel to the direction of contraction, and that, when subjected to cold, said sealing ring (18, 40, 50, 62, 72, 90) will undergo a higher degree of thermal contraction than said first system component (16, 42, 52, 64, 96) and said second system component (12, 44, 54, 70, 98), that the cross section of said sealing ring (18, 62, 72) is designed in the manner of an open hollow profile, with a radially inner wall being in some areas opposite a continuous outer wall, resulting in a cavity (28, 30) being formed between said inner and outer walls, with a first cavity (28) being formed in a wall forming a first sealing surface (20, 56) and a second cavity (30) being formed in the wall forming a second sealing surface (22, 58), **characterized in that** a spring ring (78, 80) is inserted into each of the cavities formed, wherein said first system component is a first valve component (16) and said second system component is a second valve component (12), with said sealing ring (62) having a recess in its radially outer wall.

2. Sealing arrangement according to claim 1, **characterized in that** the cross-sectional shape of said sealing ring (18, 40, 50, 62, 72, 90) is such that at least one sealing surface (20, 22, 92, 94) is inclined at an angle other than 90° with respect to the contraction direction (K) of said sealing ring (18, 40, 50, 62, 72, 90).

3. Sealing arrangement according to claim 2, **characterized in that** said sealing ring (90) is wedge-shaped in cross section, resulting in said sealing surfaces (92, 94) being inclined with respect to the direction of radial expansion of said sealing ring (90) in such a manner that the sealing ring (90), in its course against the contraction direction (K), increases in cross section on both sides.

4. Sealing arrangement according to claim 2, **characterized in that** the angle of inclination of said first sealing surface (92) is different from the angle of inclination of said second sealing surface (94).

5. Sealing arrangement according to claim 1, **characterized in that** said first valve component is a valve cage (16) and said second valve component (12, 16) is a valve housing (12).

6. Sealing arrangement according to any one of the preceding claims, **characterized in that** the first system component is a cover (42), in particular a valve cover, and the second system component is a housing (44), in particular a valve housing.

7. Sealing arrangement according to any one of the preceding claims, **characterized in that** a recess in the form of a circumferential groove (66) is formed in said outer wall.

## Revendications

1. Ensemble d'étanchéité d'un système fluidique destiné à fonctionner avec des milieux cryogéniques, comprenant une bague d'étanchéité (18, 40, 50, 62, 72, 90), dans lequel un premier composant de système (16, 42, 52, 64, 96) est relié à un deuxième composant de système (12, 44, 54, 70, 98) par l'intermédiaire de la bague d'étanchéité (18, 40, 50, 62, 72, 90), dans lequel la bague d'étanchéité (18, 40, 50, 62, 72, 90) présente en outre une première surface d'étanchéité (20, 56, 92) pour l'étanchéité avec le premier composant de système (16, 42, 52, 64, 96) et la bague d'étanchéité (18, 40, 50, 62, 72, 90) présente une deuxième surface d'étanchéité (22, 58, 94) pour l'étanchéité avec le deuxième composant de système (12, 44, 54, 70, 98), dans lequel la première surface d'étanchéité (20, 56, 92) et la deuxième surface d'étanchéité (22, 58, 94) de la bague d'étanchéité (18, 40, 50, 62, 72, 90) sont conçues de sorte que les premier et deuxième composants de système (12, 44, 54, 70, 98) se situent dans la zone des surfaces d'étanchéité (20, 22, 92, 94) dans un plan de coupe parallèlement à la direction de contraction radialement à l'intérieur de la bague d'étanchéité (18, 40, 50, 62, 72, 90) et la bague d'étanchéité (18, 40, 50, 62, 72, 90), sous l'action du froid, est contractée thermiquement plus fortement que le premier composant de système (16, 42, 52, 64, 96) et le deuxième composant de système (12, 44, 54, 70, 98), que la section transversale de la bague d'étanchéité (18, 62, 72) est réalisée à la façon d'un profilé creux ouvert, dans lequel une paroi située radialement à l'intérieur fait face par endroits à une paroi continue située à l'extérieur, de sorte qu'une cavité (28, 30) est formée entre la paroi située à l'intérieur et la paroi située à l'extérieur, dans lequel une première cavité (28) est formée sur une paroi formant une première surface d'étanchéité (20, 56) et une deuxième cavité (30) sur la paroi formant une deuxième surface d'étanchéité (22, 58), **caractérisé en ce que** respectivement une rondelle-ressort (78, 80) est insérée dans la cavité formée, dans lequel le premier composant de système est un premier composant de soupape (16) et le deuxième composant de système un deuxième composant de soupape (12), dans lequel la bague d'étanchéité (62) présente sur sa paroi située radialement à l'extérieur un évidement.

2. Ensemble d'étanchéité selon la revendication 1, **caractérisé en ce que** la bague d'étanchéité (18, 40, 50, 62, 72, 90) présente une forme de section transversale, pour laquelle au moins une surface d'étanchéité (20, 22, 92, 94) se situe de manière oblique selon un angle différent de 90° par rapport à la direction de contraction (K) de la bague d'étanchéité (18, 40, 50, 62, 72, 90).

3. Ensemble d'étanchéité selon la revendication 2, **caractérisé en ce que** la bague d'étanchéité (90) présente une forme de section transversale du type coin, de sorte que les surfaces d'étanchéité (92, 94) sont inclinées par rapport à la direction d'extension radiale de la bague d'étanchéité (90), de telle sorte que la bague d'étanchéité (90) augmente des deux côtés dans sa section transversale dans son tracé à l'encontre de la direction de contraction (K).

4. Ensemble d'étanchéité selon la revendication 2, **caractérisé en ce que** l'angle d'inclinaison de la première surface d'étanchéité (92) est différent de l'angle d'inclinaison de la deuxième surface d'étanchéité (94).

5. Ensemble d'étanchéité selon la revendication 1, **caractérisé en ce que** le premier composant de soupape est une cage de soupape (16) et le deuxième composant de soupape (12, 16) est un carter de soupape (12).

6. Ensemble d'étanchéité selon l'une quelconque des revendications précédentes, **caractérisé en ce que** le premier composant de système est un couvercle (42), en particulier un couvercle de soupape, et le deuxième composant de système est un carter (44), en particulier un carter de soupape.

7. Ensemble d'étanchéité selon l'une quelconque des revendications précédentes, **caractérisé en ce qu'un** évidement sous forme d'une rainure périphérique (66) est réalisé dans la paroi située à l'extérieur.
